# EUROPEAN PATENT SPECIFICATION

(11) **EP 0 766 900 B1**
(45) Date of publication and mention of the grant of the patent: **23.09.1998**
(21) Application number: 95924881.6
(22) Date of filing: 20.06.1995
(51) Int. Cl.: H04Q 7/30, G10L 5/00

(54) **TRANSCODING AND CHANNEL CODING ARRANGEMENT FOR A DIGITAL COMMUNICATIONS SYSTEM**
ANORDNUNG ZUM UMKODIEREN UND ZUR KANALKODIERUNG FÜR EIN DIGITALES KOMMUNIKATIONSSYSTEM
DISPOSITIF DE TRANSCODAGE ET DE CODAGE DE VOIE POUR UN SYSTEME NUMERIQUE DE COMMUNICATIONS

(30) Priority: 23.06.1994 GB 9412583
(43) Date of publication of application: 09.04.1997
(73) Proprietor: MOTOROLA LTD, Basingstoke, Hampshire RG22 4PD (GB)
(72) Inventor: KING, Barry, Michael, Swindon Wiltshire 5NY 6BG (GB); KAPADIA, Mayank, Swindon Wiltshire SN3 2PY (GB)
(74) Representative: Ibbotson, Harold
(86) International application number: EP9502378
(87) International publication number: WO9600483

(56) References cited:
- EP-A- 0 489 993
- DIGITAL CELLULAR RADIO CONFERENCE, October 1988 HAGEN, DE, pages 5b/1-5b/11, H. ROSENLUND 'THE BASE TRANSCEIVER STATION (BTS) TO BASE STATION CONTROLLER INTERFACE A-BIS'

## Description

### Field of the Invention

This invention relates in general to communications systems, and more particularly to a communications system for providing a channel coder unit and a transcoder unit remotely from a channel decoder unit.

### Backgound to the Invention

In digital communications systems there are components that encode and decode speech for communications over radio frequencies. In GSM (Global System for Mobile Communications) a speech transcoder provides the encoding and decoding ability in one component and is sometimes referred to as a speech codec. The speech codec includes both speech coder and speech decoder modules. Similarly, there is a channel codec for encoding and decoding additional information and data to the speech for transmitting and receiving over the air.

In the current GSM Digital Cellular Radio System, the speech codec delivers 13 kbits of compressed speech to the channel codec, which in turn delivers 22.8 kbits to the radio frequency (RF) path. This is called a full rate service type. Being planned is half rate speech service, where a half rate speech codec will deliver about 6 kbits to a half rate channel codec, which in turn will deliver 11.4 kbits to the RF path.

The channel codec, including both a channel coder and channel decoder, is usually at the Base Transceiver Site (BTS) site, whereas the speech codec can be at the BTS, Base Station Controller (BSC) or Mobile Switching Centre (MSC) sites. When the speech codec is not at the BTS site, GSM specifies the interface or protocol that must be used between the remote speech codec and the channel codec. Such an interface exists for full rate (GSM 08.60) and is being planned for half rate (either GSM 08.60 or new document).

In the case of full rate, the transcoder converts between 64 kbits and 16 kbits (13 kbits plus 3 kbits control) and the channel coder then brings this rate up to 22.8 kbits over the air interface.

In the case of half rate, although the transcoder to channel coder intermediate rate is not known as yet (it may however be 8 kbits and or 16 kbits including control), the net conversion performed between the switch and the air interface is known to be between 64 kbits and 11.4 kbits.

GSM specification 03.05 recommends a particular maximum delay that may be tolerated for each entity that forms a part of the speech path. There are figures for the algorithm delay that a typical implementation of a speech coder, speech decoder, channel coder, channel decoder (a composite figure) should exhibit and also delays for transfer of data between these coders/decoders.

When the transcoder is remote, the interface between the speech coder and channel coder is specified in GSM Recommendation 08.60 for full rate. In this interface there are 320 bits per speech frame and the bandwidth is 16 kbits. Out of these 320 bits per speech frame, 260 bits make up the speech data and the rest are control bits.

Both full and half rate channel coders need all the speech parameters or bits associated with the same speech frame before they can start their channel coding algorithm. Hence, when a transcoder is remote, there will exist a delay in the system that is there just in order to transfer data from the remote speech coder to the channel coder. It takes over 17ms (Tabisd, as per GSM 03.05) in full rate to transfer all the speech data from the speech to channel coder. This amounts to the second largest delay figure associated with the GSM system (in terms of a delay experienced during a call). Similarly, a relatively substantial delay exists in half rate to transfer all the speech data required from the transcoder to the channel coder before the channel coder can begin its algorithm.

When the transcoder is at the same site as the channel codec, this transfer can be much faster as the link to the channel coder is not limited to 8 or 16 kbits as in the remote transcoder case. It can be as fast as the manufacturer desires. Specifically, when the transcoder is at the channel coder site, the maximum delay the speech coder can exhibit is equal to the time it takes to produce all the speech parameters for the frame, a figure of 8.0 ms (Ttransc as per GSM 03.05).

When the transcoder is located remotely the speech coder delay is specified by GSM to be the time to generate the first parameters (Tsps) in order to minimise the effects of a large transfer delay.

The difference between the two delay criteria for the speech coder located at the channel coder site versus the speech coder located at a remote site leads to the need of much faster processors for the speech coder at the remote site than the speech coder at the channel coder site.

A further problem is caused as the speech decoder is also specified to meet a delay budget that is based on the output of PCM samples as early as possible, rather than once all PCM samples related to a frame are ready.

Hence, the manufacturer has to make sure that both speech coder and speech decoder delay budgets are met under all cases. (There is no known alignment between speech coder and speech decoder, and the worst case of alignment is when both speech coder and speech decoder need to be scheduled at the same time in order to generate the first parameters and output the first PCM samples).

Hence, a remote transcoder works harder than a transcoder located at the channel coder site as the remote transcoder needs to compensate for the larger transfer delay that is present in the remote case.

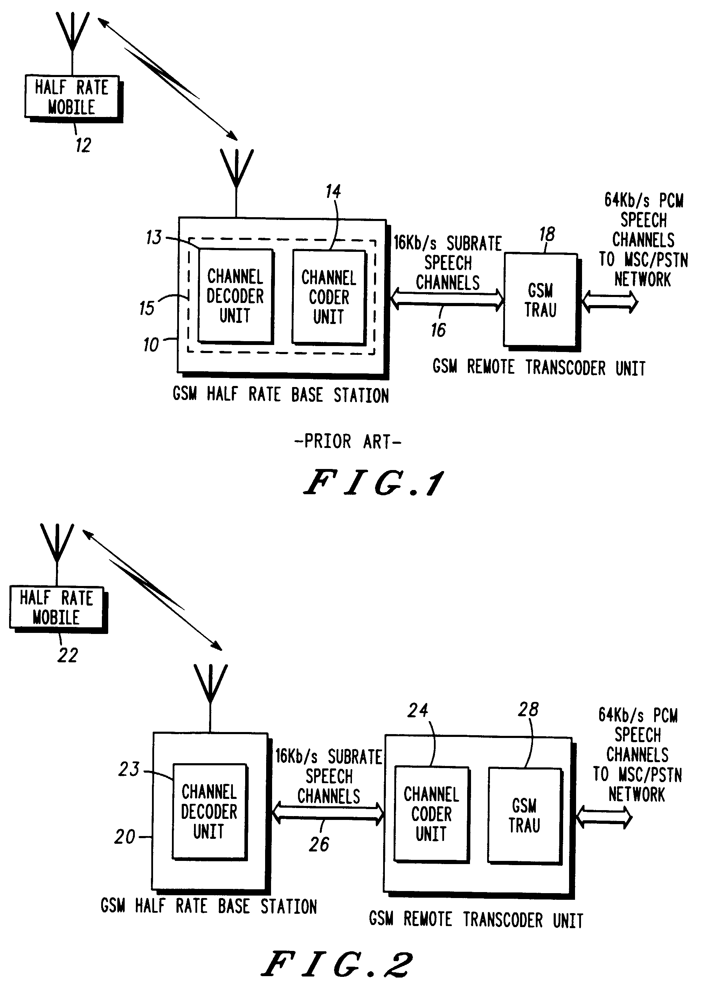

FIG. 1 shows a diagram representation of a half rate communication. A mobile station 12 communicates over radio frequencies to a base station 10. The base station 10 includes a channel codec 15. The channel codec 15 includes a channel coder unit 14 and a channel decoder unit 13. The channel codec 15 communicates via 16 Kb/s subrate speech channels 16 (link) to a transcoder 18 located remotely from the channel codec 15. The transcoder 18 then communicates to a mobile switching centre or public switched telephone network via 64 Kb/s PCM speech channels.

In a downlink communication (from the network to the mobile station) the channel coder unit 15 cannot begin its algorithm until a full speech frame has been received over the 16 Kb/s link 16 from the transcoder 18. Thus, there is a significant delay built in a downlink communication just waiting for a full speech frame to be received.

It is desirable to minimise the transfer delay exhibited between the transcoder 18 and the channel coder unit 14 when the transcoder 18 is located remotely from the channel coder unit 14.

### Summary of the Invention

According to the present invention a communications system is provided having a transcoder unit located at a first site, a channel coder unit for communication with the transcoder unit also located at the first site, and a channel decoder unit for communication with the transcoder unit over a communications link where the channel decoder unit is located at a second site separate from the first site.

According to a preferred embodiment of the present invention the transcoder, channel coder and the channel decoder units operate in a half rate mode.

### Brief Description of the Drawing

FIG. 1 shows a block diagram of a prior art half rate communications system.

FIG. 2 shows a block diagram of a half rate communications system according to the present invention.

### Detailed Description of the Preferred Embodiment

Referring to FIG. 2, a half rate communications system is shown including a mobile station 22, a base station 20, and a remote transcoder unit 28. The base station 20 includes a channel decoder unit 23. A channel coder unit 24 is located at the same site as the transcoder unit 28. Thus, the channel coder unit 24 is located at the remotely located speech codec 28 site.

An advantage of locating the channel coder unit 24 at the remote transcoder site with the remote transcoder 28 is that the transfer time between the channel coder unit 24 and the remote transcoder 28 is now minimised. Particularly when assuming that, like in the transcoder at the BTS site, the channel coder to transcoder interface may be made much faster than when the transcoder is remote. This makes this gained transfer time (Tabisd) available for the algorithms (in effect Tsps has now increased) and hence, due to the size of the figure gained (between 7ms and 17ms), can be used to realise the channel and speech coder using slower processors.

Another advantage is improved speech quality as the serial link between the base station 20 and switch is now error protected (channel coded speech), whereas it was not in the prior art case (raw speech).

The justification for the loss in the transfer delay is that the data for transmission to the air can be transferred to the base station 20 with limited buffering (much less than 17 ms). Further, since the air net rate is 11.4 kbits, this can be accommodated inside the 16 kbits bandwidth which is available in the link 26 between the remote transcoder 28 and the base site 20. A similar situation does not exist for the GSM full rate case if it is essential not to use more than 16 kbits capacity per call between transcoder 28 and base site 20. Thus, depending upon the link (26) capacity, the present invention is not limited to half rate communications systems.

The present invention provides a new mix of the speech codec 28 and channel coder 24 when the speech codec 28 is remote from the BTS site 20.

The present invention also provides a more robust interface between the combined speech codec/channel coder 28, 24 and the BTS site 20. There is a reduction in the processing power required to implement the half rate algorithm or channel coder algoithm due to the freeing of a pre-set transfer delay, making it now available for processing. Alternatively, the availability of extra processing time could be used to increase of the number of channels that could be supported by a processor.

By transferring the channel coder 24 to the remote transcoder 28 site, there is a gain in the Tabisd delay figure as specified by GSM 03.05. This gain may then be applied to reduce the processing requirements of a half rate implementation and or can be used to increase the number of channels supported by an implementation.

## Claims

1. A communications system for providing a digital communications service type, the communications system comprising:
transcoder unit (28) located at a first site;
channel coder unit (24) for communication with the transcoder unit (28) and located at the first site;
channel decoder unit (23) for communication with the transcoder unit (28) over a communications link (26) wherein the channel decoder unit (23) is located at a second site separate from the first site.

2. The communications system of claim 1 where the communications link (26) communicates at least 11.4 Kb/s subrate.

3. The communications system of any of the preceding claims wherein the second site is a base station site.

4. The communications system of any of the preceding claims wherein the first site is a switch site or a base station controller site.

5. The communications system of any of the preceding claims wherein the digital communications service is a half rate service.

6. The communications system of any of the preceding claims wherein the digital communications service is a half rate service specified by GSM.

7. The communications system of any of the preceding claims wherein the transcoder (28), channel coder (24) and the channel decoder (23) units operate in a half rate mode.

## Patentansprüche

1. Kommunikationssystem zum Bereitstellen eines digitalen Kommunikationsdienstes, wobei das Kommunikationssystem umfaßt:
eine Übertragungskodierereinheit (28) an einem ersten Ort,
eine Kanalkodierereinheit (24) zum Kommunizieren mit der Übertragungskodierereinheit (28), die sich auch an dem ersten Ort befindet,
eine Kanaldekodierereinheit (23) zum Kommunizieren mit der Übertragungskodierereinheit (28) über eine Kommunikationsverbindung (26), wobei die Kanaldekodierereinheit (23) sich an einem zweiten Ort abseits von dem ersten Ort befindet.

2. Kommunikationssystem nach Anspruch 1, wobei die Kommunikationsverbindung (26) mit einer Subraten-Geschwindigkeit von wenigstens 11,4 kb/s betreibbar ist.

3. Kommunikationssystem nach einem der vorangehenden Ansprüche, bei dem sich an dem zweiten Ort eine Basisstation befindet.

4. Kommunikationssystem nach einem der vorangehenden Ansprüche, bei dem sich an dem ersten Ort eine Vermittlungszentrale oder eine Basisstationssteuerung befindet.

5. Kommunikationssystem nach einem der vorangehenden Ansprüche, bei dem der digitale Kommunikationsdienst ein Halbratendienst ist.

6. Kommunikationssystem nach einem der vorangehenden Ansprüche, bei dem der digitale Kommunikationsdienst ein Halbratendienst nach dem GSM-Standard ist.

7. Kommunikationssystem nach einem der vorangehenden Ansprüche, bei dem der Übertragungskodierer (28), der Kanalkodierer (24) und die Kanaldekodierereinheiten (22) in einem Halbratenmode arbeiten.

## Revendications

1. Système de communication pour assurer un type de service de communication numérique, comprenant :
- une unité de transcodeur (28) située sur un premier site;
- une unité de codeur de canal (24) pour une communication avec l'unité de transcodeur (28) et située sur le premier site; et
- une unité de décodeur de canal (23) pour une communication avec l'unité de transcodeur (28) sur une liaison de communication (26), l'unité de décodeur de canal (23) étant située sur un second site à l'écart du premier site.

2. Système de communication selon la revendication 1, dans lequel la liaison de communication (26) communique sur une base d'au moins 11,4 Kbits/s.

3. Système de communication selon l'une quelconque des revendications précédentes, dans lequel le second site est un site de poste de base.

4. Système de communication selon l'une quelconque des revendications précédentes, dans lequel le premier site est un site de commutateur ou un site d'unité de commande de poste de base.

5. Système de communication selon l'une quelconque des revendications précédentes, dans lequel le service de communication numérique est un service à demi-cadence.

6. Système de communication selon l'une quelconque des revendications précédentes, dans lequel le service de communication numérique est un service à demi-cadence spécifié par le GSM.

7. Système de communication selon l'une quelconque des revendications précédentes, dans lequel les unités de transcodeur (28), de codeur de canal (24) et de décodeur de canal (23) fonctionnent selon un mode à demi-cadence.
